# EUROPEAN PATENT SPECIFICATION

(11) **EP 2 189 920 B1**
(45) Date of publication and mention of the grant of the patent: **13.08.2014**
(21) Application number: 09014289.4
(22) Date of filing: 16.11.2009
(51) Int. Cl.: G06F 21/56

(54) **Malware signature builder and detection for executable code**
Schadprogrammsignaturersteller und Detektion von ausführbaren Codes
Outil de construction de signature de programme malveillant et détection de code exécutable

(30) Priority: 17.11.2008 IL 19534008
(43) Date of publication of application: 26.05.2010
(73) Proprietor: Deutsche Telekom AG, 53113 Bonn (DE)
(72) Inventor: Dolev Shlomo, Omer 84965 (IL); Tzachar Nir, Hahadarim (IL)
(74) Representative: Flaccus, Rolf-Dieter

(56) References cited:
- EP-A1- 0 896 285
- WO-A2-01/69356
- US-A- 5 452 442
- US-A1- 2006 053 295
- US-A1- 2007 094 734
- US-A1- 2007 152 854
- US-A1- 2007 240 221

## Description

### Field of the Invention

The present invention relates to the field of malware detection. More particularly, the invention relates to malware signature generation and detection.

### Background of the Invention

Detecting a malicious software (hereinafter, "malware"- which is any program or file that is harmful to a computer) by a signature is a common practice in any software security tool. By generating a signature which uniquely identifies a malware, one may prevent the propagation of this malware through networks and stop it from spreading to other computers.

A signature of an executable (a file that contains a program and that is capable of being executed or run as a program in the computer) may be generated in any number of techniques. For example, one may use an inherent binary sequence in the executable and hash this sequence using a cryptographic hash function such as MD5 (an algorithm that is used to verify data integrity through the creation of a 128-bit message digest from unique data input as a fingerprint is to the specific individual) or SHA1 (a cryptographic hash function). The generated hash can be used as a signature. Another common technique is to incorporate details which reside in the executable headers. For example, the libraries it is linked to.

The generated signature must be as reliable as possible. The false positive and false negative rate must equal zero (or get as close as possible to zero). To achieve this goal, signature generation is usually performed by experts, and involves rigorous inspection of the suspected code. Only after identifying a common code (a code that is generated by compilers, linked libraries etc.) the expert can extract the pieces of code which uniquely identify the malware itself.

One of the most obvious shortcomings of signature based detection is handling new, still in the wild, malware. A signature specifically tailored to a given executable is designed not to match other executables, which leaves an open door for newly generated malware.

Another obvious problem is the sheer amount of signatures one must maintain and check against, when inspecting suspected executables.

Current techniques for generating signatures are either manual (expert driven) or automatic. Experts rely on their ability to disassemble the suspected executable, analyze the flow of the code and identify code sections which are unique to the suspect executable. Automated systems cannot rely on flow analysis and resort to data mining (or similar) techniques. For example, the Polygraph (James Newsome, Brad Karp, Dawn Song, "Polygraph: Automatically Generating Signatures for Polymorphic Worms," S&P05, pp. 226-241, 2005) system tries to find matching patterns in a flow of suspected network traffic. Such common patterns are then converted to signatures.

US 5,452,442 discloses a statistical method for automatically extracting and/or evaluating signatures of a computer virus. A candidate signature is accepted as a valid signature if the estimated probability of the occurrence of the candidate virus signature is less than a threshold probability.

US 2007/0094734 discloses a method for classifying polymorphic computer software by extracting features from a suspect file and comparing the extracted features to features of known classes of software.

EP 0 896 285 discloses a method for efficient detection of computer viruses by applying a first mapping to obtain a subset of standard signatures and applying a second mapping to identify a set of computer viruses that are likely to be present in a data string.

US 2007/0152854 discloses a method for determining whether a suspect computer file is malicious by modeling an extracted byte code sequence using at least one entropy modeling test, comparing each entropy result to a table in order to determine a probability value, and summing the probability values to determine a likelihood that the byte code sequence is malicious.

US 2007/0240221 discloses a system and method for detecting malware on a mobile platform. A checksum is computed and that checksum is compared with a checksum obtained from a malware-free copy of the executable.

WO 01/69356 discloses a histogram-based virus detection system having a P-code data file, a virus definition file for holding signatures of known viruses, and an engine containing a P-code interpreter, a scanning module for scanning regions in the virus definition file, and an emulating module for emulating instructions in the file.

US 2006/0053295 discloses a method and system for detecting a worm signature in network traffic. A hash function is computed for at least one portion of the data stream. At least one counter is incremented responsive to the computed hash function result. Each counter corresponds to a respective computed hash function result. Repeating content is identified when at least one counter exceeds a count value. It is then verified that the identified repeating content is not a benign string.

It is therefore an object of the present invention to reduce the number of signatures used to detect malware, thus speeding-up the malware-detection process.

It is another object of the present invention, to be able to detect new unknown malware.

Other objects and advantages of the invention will become apparent as the description proceeds.

### Summary of the Invention

The present invention is directed to a method for implementing malware signature builder and detection for executable codes, according to which the op-codes of the executables are inspected, while disregarding other parameters of the executables. Signatures are generated from common engines of executable codes and a large number of malwares of the same family are represented by a small number of signatures. Then known and unknown malwares are identified using the small number of signatures.

In one embodiment, benign executables are disassembled by a disassembler and the op-code sequences of the benign executable are stored in a first DB and each malware executable is disassembled by the disassembler to a sequence of op-codes. All common op-codes substrings are found by a string comparator (e.g., using an LCS process) for each pair of malware executables. A set of common op-codes substrings between any two malware executables is composed by the string comparator, which also checks which of the op-code substrings appear in at least one benign executable op-code sequence stored in the first DB. The common op-code sub-strings are ignored and a set of common op-code substrings, which do not appear in any benign executable op-code for each pair of malware executables is identified by the string comparator. All sets of common op-code substrings are stored in a second DB, as candidate signatures.

The string comparator may be used to find, for each candidate signature, the malwares in which the candidate signature appears as well as the minimal set of candidate signatures identifying all the malware executables. Then the minimal set is stored in the second DB.

The op-code sequences may be converted into regular expressions, which can be matched using binary sequences.

Signatures may be converted to regular expressions by extracting by the string converter, op-code substrings (signatures) from the second DB and converting the op-code substrings into regular expressions using a lookup table; reducing the length of the resulting regular expressions by string converter by adding "binary masks" as matchable elements; and storing the regular expressions in the second DB.

### Brief Description of the Drawings

The above and other characteristics and advantages of the invention will be better understood through the following illustrative and non-limitative detailed description of preferred embodiments thereof, with reference to the appended drawings, wherein:
- Fig. 1 illustrates a system for reducing the number of signatures used to detect malwares, according to an embodiment of the invention;
- Fig. 2 is a flow diagram illustrating the generation of signatures for a family of malwares; and
- Fig. 3 is a flow diagram form illustrating the generation of a small set of signatures for a family of malwares.

### Detailed Description of Preferred Embodiments

The present invention discloses a method and use for signature extraction from malwares. Accordingly, families of malwares, such that two members of the same family that share a common "engine", are identified.

It is well known that there are malware generation utilities which use a common engine to create new malware. The present invention proposes to generate signatures from said engine, thus allowing a large number of malwares of the same family and even still unknown members of the same family to be identified by a small number of signatures- Using a small number of signatures to represent a large number of malwares alleviates the malware detection process, making it more efficient both in terms of resource allocated, CPU usage and time complexity. Moreover, future malware designers, that will use the same shared engine, will also be detectable by the proposed generated signatures.

According to the present invention, only the portion of a machine language instruction that specifies the operation to be performed (hereinafter "op-codes") of an executable are inspected, while disregarding any parameters given. This is a new technique, which has not been considered before. The reasoning behind it is that one must be aware that malware designers will strive to hide such common engines using a broad range of techniques. For example, these common engines may be located in different locations inside different executables, they may be mapped to different addresses in memory or even perturbed slightly. By using the op-codes, methods used by malware designers can be overcome.

### Multiple Files Signature Generation

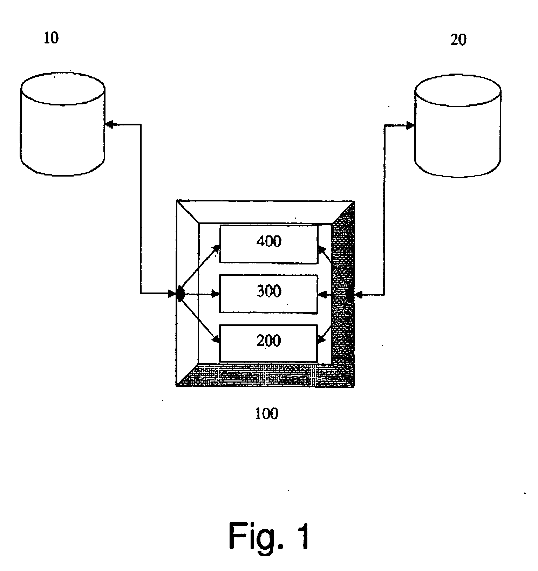

A system for reducing the number of signatures used to detect malwares, according to an embodiment of the invention, is shown in Fig. 1. The system comprises a computer 100, connected to a first database 10 (DB 10) and a second database 20 (DB 20). Computer 100 includes a disassembler 200 (used to convert a program in its executable, ready-to-run, form or object code into a representation in some form of assembler language so that it is readable), a string comparator 300 and a string converter 400.

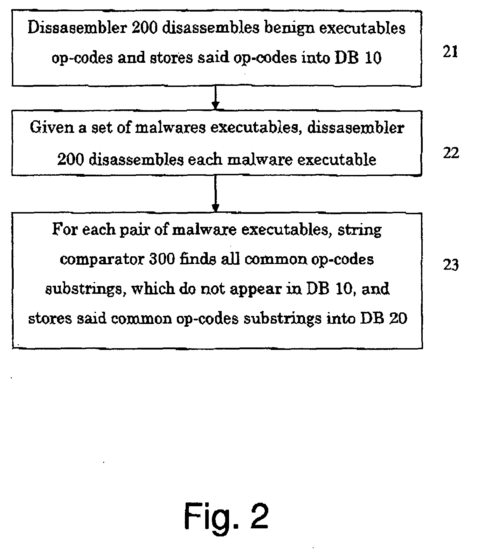

Fig. 2 illustrates a flow diagram of the process which is performed according to an embodiment of the present invention. Accordingly, generating signatures starts at a preprocessing step. In step 21, a DB 10 that holds samples of benign executables is composed by disassembling each benign executable by disassembler 200, and storing the op-code sequences of said benign executable in DB 10. According to one embodiment of the present invention the IDA-Pro (DataRescue, Liège - Belgium) disassembler is used. A large and diverse database is of the essence, as the size and the variety of the database directly affect the false-positive rate (i.e., identifying an executable as malware, even though it is perfectly safe). According to one embodiment of the present invention, a database of 23,000 benign executables, ranging over most common operating systems is established.

Step 22 illustrates that given a family of malwares (signature generation for stand-alone malware will be discussed later on), each malware executable is disassembled by disassembler 200 into a sequence of op-codes. According to one embodiment of the present invention the IDA-Pro disassembler is used. Step 23 illustrates that for each pair of malware executables, string comparator 300 finds all common op-codes substrings, using any linear time LCS (Largest Common Substring) algorithm. Step 23 further illustrates that after string comparator 300 composes the set of common op-codes substrings between any two malware executables, it checks which of said op-codes substrings appear in at least one benign executable op-code sequence in DB 10, and these common op-code sub-strings are ignored. The end result of this step is that for each pair of malware executables, there exists a set of common op-code substrings, which do not appear in any benign executable op-code. These sets of common op-code substrings are stored by string comparator 300 in DB 20. Each of these op-code substrings, which are the candidate signatures, can be used as a signature.

According to one embodiment of the present invention, all of the candidate signatures stored in DB 20 are used.

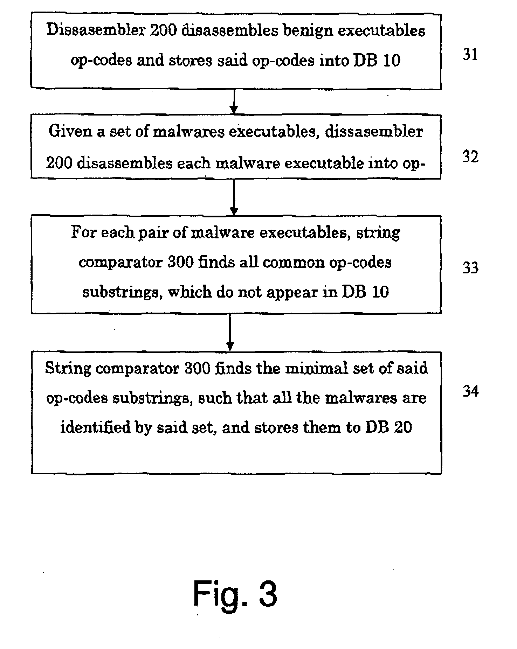

According to another embodiment of the present invention, a small number of signatures is desired (e.g., in real-time filtering), and a small as possible number of the candidate signatures is used, as each op-code substring can potentially cover more than just one pair of malware executables- The signatures found using this process are likely to contain the shared code segments of the malware executables, which, in turn, define the common "engine" of said malware executables. Moreover, such common engines are very likely to match future versions of these malware executables, as future versions normally employ said common engine. Referring to Fig. 3, steps 31-33 are identical to the step 21-23 specified in Fig. 2. However, in order to find a small number of signatures from the set of candidate signatures, as illustrated in step 34, string comparator 300 finds for each candidate signature the malwares it appears in (as it may appear in more than two). String comparator 300 then finds the minimal set of candidate signatures such that all the malware executables are identified by said set. This is done by converting the problem of the minimal set of candidate signature to the problem of coloring of the malware files set.

Each candidate signature is converted to a color, and as such, colors all the malware executables it appears in. The combinatory problem to find a minimal set of colors such that all malware executables are colored at least once, is then solved by string comparator 300. As this problem is NP-complete (a problem is called NP (Nondeterministic Polynomial) if its solution can be guessed and verified in polynomial time. If a problem is NP and all other NP problems are polynomial-time reducible to it, the problem is NP-complete), according to one embodiment of the present invention, a simple greedy algorithm is used, which yields a good approximation of signatures to be used. For example, in a family of 80 malwares examined, 15 signatures were enough to cover the whole family. The found set of candidate signatures is then stored by string comparator 300 into DB 20.

The result of this stage is a set of signatures, which are composed of a sequence of op-codes substrings, as described above. According to one embodiment of the present invention, string converter 400, as will be detailed below, is then responsible to convert said op-code sequences into regular expressions, which can be matched using binary sequences.

### Conversing Signatures to Regular Expressions

According to one embodiment of the present invention, string converter 400 extracts op-code substrings (signatures) from DB 20, and converts said op-code substrings into regular expressions- This is done in order to get a compact, dense, easy to use signature. As each op-code has a finite set of binary representations, the generation of a regular expression is facilitated by a simple lookup table. However, the resulting regular expressions are rather long as the set of possible binary representations can be quite large. For example, the "add" op-code has 9 different binary representations. Moreover, the length of the regular expressions is rather long, as the smallest element matchable by most regular expressions implementations is a byte, some op-codes are shorter than a byte and encode registers information in this same byte.

In an embodiment of the present invention, the length of the resulting regular expressions is reduced by string converter 400, using the following augmentation to regular expression operator. Namely, string converter 400 adds "binary masks" (a screen of numbers that tells which numbers to look at underneath. In a binary mask, a "1" over a number means "Look at the number underneath"; a "0" means "Don't look.") as matchable elements. For example, the following binary values are matched, "0xa1, 0xa2, 0va3,..., 0xaf", using a single expression, "&0xaf", which implies that a byte X matches if and only if the bitwise (i.e., data at the bit level) and of X and 0xaf differs from 0- Hence, string converter 400 reduces the length of the generated regular expressions considerably. After creating said regular expressions from each of the signatures, string converter 400 stores said regular expressions into DB 20.

### Exemplary Results

A family of 99 worms was studied. A total of 15 signatures were enough to cover 79 worms of the family. The other 20 worms did not have a common substring with other worms and needed a signature of their own.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. Method for implementing malware signature builder and detection for executables codes, comprising:
a) disassembling benign executables by a disassembler (200) to a sequence of machine language instruction op-codes while disregarding other parameters;
b) storing (21, 31) op-code sequences of each of said benign executables in a first database (10);
c) disassembling (22, 32) each malware executable of a given malware family by said disassembler to a sequence of machine language instruction op-codes while disregarding other parameters;
d) for each pair of malware executables, finding (23, 33) all common op-code substrings by a string comparator (300);
e) composing a set of common op-code substrings between any two malware executable codes, by said string comparator;
f) checking by said string comparator, which of said common op-code substrings appear in at least one op-code sequence of a benign executable stored in said first database;
g) ignoring said common op-code substrings that appear in at least one op-code sequence of a benign executable;
h) for each pair of malware executables, identifying (23, 33), by said string comparator, a set of common op-code substrings which do not appear in any op-code sequence of a benign executable; and
i) storing by said string comparator in a second database (20), all sets of common op-code substrings not appearing in any op-code sequence of a benign executable, as candidate signatures.

2. Method according to claim 1, wherein all common op-codes substrings are found by the string comparator using a largest common substring process.

3. Method according to claim 1, further comprising:
a) finding, for each candidate signature, by the string comparator, the malwares in which said candidate signature appears;
b) finding (34), by the string comparator and a greedy algorithm, the minimal set of candidate signatures identifying all the malware executables; and
c) storing said minimal set in the second database (20).

4. Method according to claim 3, further comprising converting the op-code sequences into regular expressions which can be matched using binary sequences.

5. Method according to claim 4, wherein signatures are converted to regular expressions by:
a) extracting by a string converter (400), op-code substrings from the second database (20) and converting said extracted op-code substrings into regular expressions using a lookup table;
b) reducing the length of the resulting regular expressions converted by said string converter by adding binary masks as matchable elements; and
c) storing said regular expressions in the second database.

6. System for reducing the number of signatures used to detect malwares, comprising:
a) a computer (100);
b) a first database (10) and a second database (20) connected to said computer;
c) a disassembler (200) included in said computer; and
d) a string comparator (300) included in said computer,
**characterized in that**
- said disassembler is operable to disassemble benign executables by a sequence of machine language instruction op-codes while disregarding other parameters, store op-code sequences of each of said benign executables in said first database, and disassemble each malware executable of a given malware family to a sequence of machine language instruction op-codes while disregarding other parameters,
- said string comparator is operable to find all common op-code substrings for each pair of malware executables, compose a set of common op-code substrings between any two malware executable codes, check which of said common op-code substrings appear in at least one op-code sequence of a benign executable stored in said first database, ignore said common op-code substrings that appear in at least one op-code sequence of a benign executable, identify for each pair of malware executables a set of common op-code substrings which do not appear in any op-code sequence of a benign executable, and store in said second database all sets of common op-code substrings not appearing in any op-code sequence of a benign executable, as candidate signatures.

## Patentansprüche

1. Verfahren zur Umsetzung von Schadprogrammsignaturerstellern und zur Detektion von Codes ausführbarer Dateien, um-fassend:
a) Disassemblieren gutartiger ausführbarer Dateien durch einen Disassembler (200) zu einer Folge von Befehls-Opcodes in Maschinensprache, wobei andere Parameter außer Acht gelassen werden,
b) Speichern (21, 31) von Opcode-Folgen jeder einzelnen der gutartigen ausführbaren Dateien in einer ersten Datenbank (10),
c) Disassemblieren (22, 32) jeder ausführbaren Schadprogrammdatei einer gegebenen Schadprogrammfamilie durch den Disassembler, und zwar zu einer Folge von Befehls-Opcodes in Maschinensprache, wobei andere Parameter außer Acht gelassen werden,
d) Finden (23, 33) aller gemeinsamen Opcode-Substrings für jedes Paar ausführbarer Schadprogrammdateien durch einen String-Vergleicher (300),
e) Erstellen eines Satzes von gemeinsamen Opcode-Substrings, die zwei beliebigen ausführbaren Schadprogrammdatei-Codes gemein sind, durch den String-Vergleicher,
f) Prüfen, durch den String-Vergleicher, welche der gemeinsamen Opcode-Substrings in wenigstens einer Opcode-Folge einer gutartigen ausführbaren Datei, die in der ersten Datenbank gespeichert ist, enthalten sind,
g) Unberücksichtigt lassen der gemeinsamen Opcode-Substrings, die in wenigstens einer Opcode-Folge einer gutartigen ausführbaren Datei enthalten sind,
h) Identifizieren (23, 33) eines Satzes gemeinsamer Opcode-Substrings, welche nicht in einer beliebigen Opcode-Folge einer gutartigen Schadprogrammdatei enthalten sind, für jedes Paar von ausführbaren Schadprogrammdateien durch den String-Vergleicher, und
i) Speichern aller Sätze von gemeinsamen Opcode-Substrings, die nicht in einer beliebigen Opcode-Folge einer gutartigen ausführbaren Datei enthalten sind, als Signatur-Kandidaten in einer zweiten Datenbank (20) durch den String-Vergleicher.

2. Verfahren nach Anspruch 1, in welchem alle gemeinsamen Opcode-Substrings über den String-Vergleicher unter Anwendung eines Largest-Common-Substring-Verfahrens gefunden werden.

3. Verfahren nach Anspruch 1, des Weiteren umfassend:
a) Finden der Schadprogramme, in denen der Signatur-Kandidat enthalten ist, und zwar für jeden einzelnen Signatur-Kandidaten, durch den String-Vergleicher,
b) Finden (34) des Minimalsatzes von Signatur-Kandidaten, durch den alle ausführbaren Schadprogrammdateien identifiziert werden, durch den String-Vergleicher und einen Greedy-Algorithmus, and
c) Speichern des Minimalsatzes in der zweiten Datenbank (20).

4. Verfahren nach Anspruch 3, des Weiteren umfassend das Konvertieren der Opcode-Folgen in reguläre Ausdrücke, die unter Anwendung von Binär-Folgen gematcht werden können.

5. Verfahren nach Anspruch 4, in welchem Signaturen in reguläre Ausdrücke konvertiert werden, und zwar durch:
a) Extrahieren von Opcode-Substrings aus der zweiten Datenbank (20) und Konvertieren der extrahierten Opcode-Substrings in reguläre Ausdrücke durch einen String-Konverter (400) unter Verwendung von Lookup-Tabellen,
b) Reduzieren der Länge der resultierenden regulären Ausdrücke, die über den String-Konverter konvertiert wurden, als matchbare Elemente durch Addieren von Binär-Masken, und
c) Speichern der regulären Ausdrücke in der zweiten Datenbank.

6. System zur Reduzierung der Anzahl von Signaturen, die für die Detektion von Schadprogrammen verwendet werden, umfassend:
a) einen Computer (100),
b) eine erste Datenbank (10) und eine zweite Datenbank (20), die mit dem Computer verbunden sind,
c) einen Disassembler (200), der in dem Computer enthalten ist, und
d) einen String-Vergleicher (300), der in dem Computer enthalten ist,
**dadurch gekennzeichnet, dass**
- der Disassembler so betrieben werden kann, dass er gutartige ausführbare Dateien durch eine Folge von Befehls-Opcodes in Maschinensprache disassembliert, wobei andere Parameter außer Acht gelassen werden, Opcode-Folgen jeder einzelnen der gutartigen ausführbaren Dateien in der ersten Datenbank speichert, und jede ausführbare Schadprogrammdatei einer gegebenen Schadprogrammfamilie zu einer Folge von Befehls-Opcodes in Maschinensprache disassembliert, wobei andere Parameter außer Acht gelassen werden,
- der String-Vergleicher so betrieben werden kann, dass er alle gemeinsamen Opcode-Substrings für jedes Paar ausführbarer Schadprogrammdateien findet, einen Satz von gemeinsamen Opcode-Substrings, die zwei beliebigen ausführbaren Schadprogrammdatei-Codes gemein sind, erstellt, prüft, welche der gemeinsamen Opcode-Substrings in wenigstens einer Opcode-Folge einer gutartigen ausführbaren Datei, die in der ersten Datenbank gespeichert ist, enthalten sind, die gemeinsamen Opcode-Substrings, die in wenigstens einer Op-code-Folge einer gutartigen ausführbaren Datei enthalten sind, unberücksichtigt lässt, einen Satz gemeinsamer Op-code-Substrings identifiziert, welche nicht in einer beliebigen Opcode-Folge einer gutartigen Schadprogrammdatei enthalten sind, und alle Sätze von gemeinsamen Opcode-Substrings, die nicht in einer beliebigen Opcode-Folge einer gutartigen ausführbaren Datei enthalten sind, als Signatur-Kandidaten in der zweiten Datenbank speichert.

## Revendications

1. Procédé de mise en oeuvre d'un générateur de signature de programmes malveillants et de détection de codes d'exécutables, comprenant :
a) désassemblage d'exécutables bénins par un désassembleur (200) en une séquence de codes d'opération d'instruction en langage machine en ne tenant pas compte des autres paramètres ;
b) stockage (21, 31) des séquences de codes d'opération de chacun desdits exécutables bénins dans une première base de données (10) ;
c) désassemblage (22, 32) de chaque exécutable malveillant d'une famille de programmes malveillants donnée par ledit désassembleur en une séquence de codes d'opération d'instruction en langage machine en ne tenant pas compte des autres paramètres ;
d) pour chaque paire d'exécutables malveillants, recherche (23, 33) de toutes les sous-chaînes de codes d'opération communes par un comparateur de chaînes (300) ;
e) composition d'un ensemble de sous-chaînes de codes d'opération communes entre toutes les paires de codes d'exécutables malveillants, par ledit comparateur de chaînes ;
f) recherche par ledit comparateur de chaînes, desdites sous-chaînes de codes d'opération communes qui apparaissent dans au moins une séquence de codes d'opération d'un exécutable bénin stocké dans ladite première base de données ;
g) ignorance desdites sous-chaînes de codes d'opération communes qui apparaissent dans au moins une séquence de codes d'opération d'un exécutable bénin ;
h) pour chaque paire d'exécutables malveillants, identification (23, 33), par ledit comparateur de chaînes, d'un ensemble de sous-chaînes de codes d'opération communes qui n'apparaissent dans aucune séquence de codes d'opération d'un exécutable bénin ; et
i) stockage par ledit comparateur de chaînes dans une seconde base de données (20), de tous les ensembles de sous-chaînes de codes d'opération communes qui n'apparaissent dans aucune séquence de codes d'opération d'un exécutable bénin, en tant que signatures candidates.

2. Procédé selon la revendication 1, dans lequel toutes les sous-chaînes de codes d'opération communes sont recherchées par le comparateur de chaînes en utilisant un processus de plus grande sous-chaîne commune.

3. Procédé selon la revendication 1, comprenant en outre :
a) la recherche, pour chaque signature candidate, par le comparateur de chaînes, des programmes malveillants dans lesquels ladite signature candidate apparaît ;
b) la recherche (34), par le comparateur de chaînes et un algorithme glouton, de l'ensemble minimal de signatures candidates identifiant tous les exécutables malveillants ; et
c) stockage dudit ensemble minimal dans la seconde base de données (20).

4. Procédé selon la revendication 3, comprenant en outre la conversion des séquences de codes d'opération dans des expressions régulières qui peuvent être appariées en utilisant des séquences binaires.

5. Procédé selon la revendication 4, dans lequel les signatures sont converties en des expressions régulières :
a) en extrayant, par un convertisseur de chaînes (400), des sous-chaînes de codes d'opération de la seconde base de données (20) et en convertissant lesdites sous-chaînes de codes d'opération extraites en des expressions régulières en utilisant une table de correspondance ;
b) en réduisant la longueur des expressions régulières résultantes converties par ledit convertisseur de chaînes en ajoutant des masques binaires en tant qu'éléments appariables ; et
c) en stockant lesdites expressions régulières dans la seconde base de données.

6. Système de réduction du nombre de signatures utilisées pour détecter des programmes malveillants, comprenant :
a) un ordinateur (100) ;
b) une première base de données (10) et une seconde base de données (20) reliées audit ordinateur ;
c) un désassembleur (200) inclus dans ledit ordinateur ; et
d) un comparateur de chaînes (300) inclus dans ledit ordinateur, **caractérisé en ce que**
ledit désassembleur peut être utilisé pour désassembler des exécutables bénins en une séquence de codes d'opération d'instruction en langage machine en ne tenant pas compte des autres paramètres, stocker les séquences de codes d'opération de chacun desdits exécutables bénins dans ladite première base de données, et désassembler chaque exécutable malveillant d'une famille de programmes malveillants donnée en une séquence de codes d'opération d'instructions en langage machine en ne tenant pas compte des autres paramètres,
ledit comparateur de chaînes peut être utilisé pour rechercher toutes les sous-chaînes de codes d'opération communes pour chaque paire d'exécutables malveillants, composer un ensemble de sous-chaînes de codes d'opération communes entre toutes paires de codes d'exécutables malveillants, rechercher lesquelles desdites sous-chaînes de codes d'opération communes apparaissent dans au moins une séquence de codes d'opération d'un exécutable bénin stocké dans ladite première base de données, ignorer lesdites sous-chaînes de codes d'opération communes qui apparaissent dans au moins une séquence de codes d'opération d'un exécutable bénin, identifier pour chaque paire d'exécutables malveillants un ensemble de sous-chaînes de codes d'opération communes qui n'apparaissent dans aucune séquence de codes d'opération d'un exécutable bénin, et stocker dans la seconde base de données tous les ensembles de sous-chaînes de codes d'opération communes qui n'apparaissent dans aucune séquence de codes d'opération d'un exécutable bénin, en tant que signatures candidates.
